# FASCICULE DE BREVET EUROPEEN

(11) **EP 4 355 654 B1**
(45) Date de publication et mention de la délivrance du brevet: **26.03.2025**
(21) Numéro de dépôt: 22744794.3
(22) Date de dépôt: 15.06.2022
(51) Int. Cl.: B64C 13/04, B64C 13/22, B64C 27/57, B64C 27/68, G05G 5/03

(54) **COMPENSATEUR DE VOL POUR AÉRONEF**
FLUGKOMPENSATOR FÜR FLUGZEUG
FLIGHT COMPENSATOR FOR AIRCRAFT

(30) Priorité: 18.06.2021 FR 2106474
(43) Date de publication de la demande: 24.04.2024
(73) Titulaire: Safran Electronics & Defense, 75015 Paris (FR)
(72) Inventeur: PEREZ-DUARTE, Alexis, 77550 MOISSY CRAMAYEL (FR); DUGAIL, Fabien, 77550 MOISSY CRAMAYEL (FR)
(74) Mandataire: Casalonga
(86) Numéro de dépôt international: PCT/FR2022/051165
(87) Numéro de publication internationale: WO 2022/263777

(56) Documents cités:
- EP-A1- 2 626 297
- FR-A1- 2 667 044
- FR-A1- 2 718 102
- FR-A1- 2 970 697
- US-B1- 6 325 331
- US-B1- 7 044 024

## Description

La présente invention concerne, de manière générale, les systèmes de commande de vol pour aéronef et se rapporte plus particulièrement à un compensateur de vol pour aéronef, notamment pour hélicoptère.

Les compensateurs de vol, ou trim, ont notamment pour fonction de compenser les perturbations susceptibles d'avoir une influence sur les paramètres de vol de l'aéronef, sans que le pilote n'ait à agir sur les commandes de vol.

En complément, les actionneurs de trim restituent classiquement au pilote un effort résistant sur les commandes de vol sous la forme d'un retour d'effort. Cet effort est généralement passif, soit linéaire (trims à ressorts) soit constant (trims à friction).

En ce qui concerne les actionneurs de trim fournissant un effort passif de type friction, ceux-ci sont configurés pour fournir un effort constant, quelle que soit la position de la commande de vol et présentent un paramétrage spécifique à chaque commande de vol, notamment spécifique au roulis, au lacet, au tangage, ...

Lorsque l'on souhaite modifier la force de retour d'effort, il est nécessaire de reconfigurer le paramétrage de l'équipement par un changement de réglage ou de composants.

En ce qui concerne les actionneurs de trim délivrant un effort de friction actif, le niveau de friction est indépendant de la position de l'instrument de commande de vol. US6325331, EP2626297, US7044024, FR2667044 divulguent des actionneurs selon l'état de la technique.

Au vu de ce qui précède, le but de l'invention est de proposer un compensateur de vol permettant de pallier ces inconvénients et notamment de fournir une friction variable pilotée, notamment en fonction de la machine, de l'axe de commande ou en temps réel en fonction des conditions de vol, et asservie.

L'invention a donc pour objet, selon un premier aspect, un compensateur de vol pour aéronef, comprenant un module de friction à friction variable couplé d'une part à un moteur et d'autre part à un arbre de sortie par l'intermédiaire d'une chaîne cinématique.

Ce compensateur de vol comporte un circuit de commande pilotant le module de friction à partir d'une valeur de déplacement angulaire de l'arbre de sortie délivrée par un capteur de position et en fonction d'un signal de commande de retour d'effort délivré par un calculateur de commande de vol.

En d'autres termes, le calculateur de commande de vol met en œuvre une boucle d'asservissement pour définir le niveau de friction en exploitant une valeur de déplacement angulaire de l'arbre de sortie

Il est ainsi possible de restituer un effort qui est élaboré à partir d'une loi de commande conditionnée par des paramètres du calculateur de vol et à partir de la mesure du déplacement du manche, c'est-à-dire la commande de vol manipulée par le pilote.

Selon une autre caractéristique, le module de friction à friction variable comprend un frein magnétique à couple de friction variable couplé entre l'arbre moteur et la chaîne cinématique.

Par exemple, le frein magnétique est lié à l'arbre moteur par un réducteur irréversible.

Ce compensateur de vol comporte notamment un moteur d'entraînement de l'arbre moteur piloté par un signal de commande délivré par le calculateur de commande de vol.

Dans un mode de réalisation, le frein magnétique à friction variable comporte par exemple un premier rotor lié à l'arbre moteur et équipé d'une bobine de commande et un deuxième rotor monté mobile en regard de pôles du premier rotor, le premier rotor comprenant un aimant placé en regard du deuxième rotor et ayant une puissance suffisante pour engendrer localement dans le deuxième rotor un niveau d'induction sensiblement égal à un niveau d'induction maximal engendré par la bobine lorsque celle-ci est alimentée.

Par exemple, le deuxième rotor a une forme annulaire et est reçu à pivotement autour de son axe central dans une rainure circulaire du premier rotor, la rainure ayant des flancs pourvus de reliefs formant les pôles du premier rotor, le frein comportant au moins un aimant monté sur les flancs de la rainure.

Dans un mode de réalisation, le système de commande comprend deux aimants montés chacun sur les flancs de la rainure.

On peut prévoir que les aimants soient positionnés sensiblement en vis-à-vis l'un de l'autre.

Avantageusement, l'aimant est monté entre deux pôles du stator.

L'invention a également pour objet un aéronef, en particulier un hélicoptère comprenant un système de commande tel que défini ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement l'architecture d'un compensateur de vol conventionnel,
[Fig 2] illustre schématiquement l'architecture d'un compensateur de vol conforme à l'invention
[Fig 3] est une vue schématique en coupe d'un frein magnétique d'un compensateur de vol selon l'invention, selon un plan contenant l'axe de rotation du frein ;
[Fig 4] est une vue en coupe transversale du frein de la figure 3 ; et
[Fig 5] est une vue à plus grande échelle de détails de positions des premier et deuxième rotors en regard l'un de l'autre.

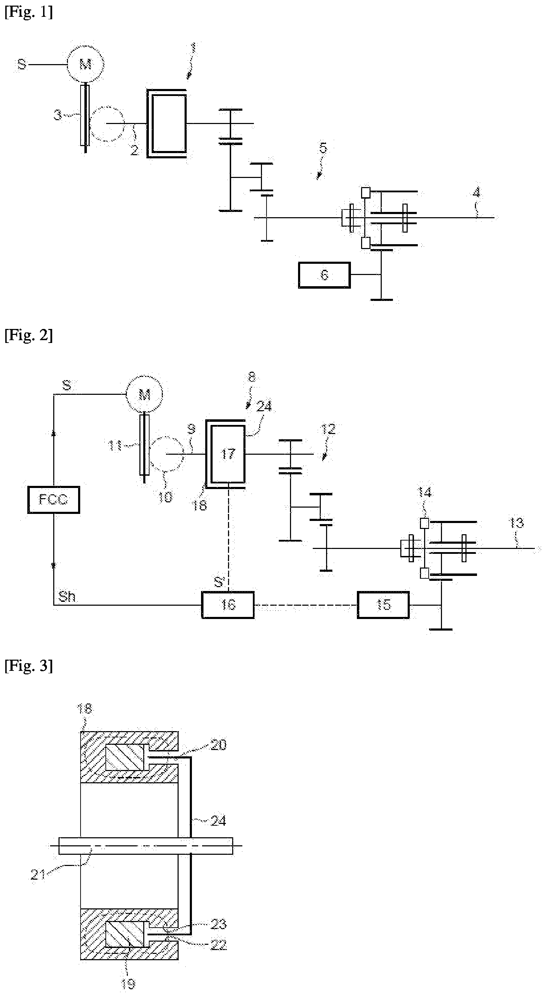

On se réfère tout d'abord à la figure 1 qui illustre l'architecture générale d'un compensateur de vol, ou trim, pour hélicoptère selon l'état de la technique.

Comme on le voit, ce compensateur de vol comprend essentiellement un frein passif 1 à friction comprenant un arbre d'entrée 2, lié par l'intermédiaire d'un réducteur irréversible à l'arbre moteur 3 d'un moteur M piloté par un signal de commande S, et lié à un arbre de sortie 4 par l'intermédiaire d'une chaîne cinématique 5 équipée ici d'un capteur 6 de mesure de la position angulaire de l'arbre de sortie.

Comme indiqué précédemment, ce type de compensateur de vol à friction délivre un retour d'effort constant, lequel s'oppose toujours au déplacement de l'instrument de commande de vol et qui est spécifique à un équipement donné de sorte qu'il est nécessaire de reconfigurer le paramétrage du compensateur, et en particulier le frein passif 1, lorsque l'on souhaite modifier le niveau de couple.

On a représenté sur la figure 2 l'architecture d'un compensateur de vol piloté selon l'invention.

Ce compensateur de vol comporte un module de friction 8 fournissant un niveau de friction variable comportant un arbre d'entrée 9 couplé par l'intermédiaire d'un réducteur irréversible 10, par exemple une vis sans fin, à un arbre moteur 11 entraîné en rotation par un moteur électrique M piloté par un signal de commande S et une chaîne cinématique 12 couplée entre le module de friction 8 et un arbre de sortie 13 lui-même couplé, par exemple par l'intermédiaire d'un système de bielles, au manche (non représenté) directement manipulé par le pilote.

De manière conventionnelle, la chaîne cinématique comporte un système d'engrenage ainsi que des butées de fin de course, telles que 14, et est également équipée d'un capteur 15 de mesure de la position angulaire de l'arbre de sortie 13.

Le compensateur de vol comporte encore un circuit de commande comprenant une carte électronique 16 recevant les valeurs de déplacement angulaire de l'arbre de sortie délivrées par le capteur 15 et fournissant une commande S'au module de friction 10 à friction variable.

Le système de commande est par ailleurs raccordé au calculateur de commande de vol FCC qui délivre un signal de commande haptique Sₕ à la carte électronique 16 et le signal de commande du moteur S.

Le module de friction 8 est piloté par la carte électronique 16 sous le contrôle du calculateur de commande de vol FCC de manière à restituer un effort de friction variable en fonction de la position de l'instrument de commande de vol manipulé par le pilote et en fonction des conditions de vol, par exemple en modifiant la valeur de couple de friction délivré par le compensateur en fonction de la position angulaire de la commande de vol et en fonction de phases de vol.

A cet égard, le calculateur de commande de vol FCC met en œuvre une boucle d'asservissement pour définir le niveau de friction à partir d'une valeur de déplacement angulaire de l'arbre de sortie fournie par le capteur 15.

En outre, l'effort restitué à l'instrument de commande de vol est conditionné par une loi de commande, stockée dans le calculateur de vol FCC et conditionnée par les paramètres du calculateur de vol et en fonction de la position de l'instrument de commande et de sa cinématique.

On a représenté sur la figure 3 un exemple de réalisation de l'actionneur 10 à friction variable.

Cet actionneur comprend un frein magnétique 17 qui est couplé à l'arbre 9 et à la chaîne cinématique 12. Ce frein magnétique comporte un premier rotor 18 équipé d'au moins une bobine de commande 19. Ce premier rotor 18 comprend une armature dans laquelle est ménagée une rainure 20 de forme circulaire et d'axe central 21. La rainure a un flanc extérieur et un flanc intérieur qui présentent respectivement des reliefs formant des pôles 22 et 23. Les pôles 22 sont décalés angulairement des pôles 23 de sorte que chaque pôle 22 se trouve en regard de l'espace s'étendant entre deux pôles 23 adjacents l'un de l'autre.

La bobine de commande 19 a un diamètre voisin de celui de la rainure 20 et est montée dans le premier rotor 2 coaxialement à la rainure de telle manière que, lorsque la bobine de commande 19 est soumise à un courant d'excitation, elle engendre des flux magnétiques passant des pôles 22 aux pôles 23, ou inversement, en traversant la rainure 20 selon une direction non radiale. La bobine de commande 19 est reliée à la carte électronique 16.

Le frein magnétique comprend également un deuxième rotor 24 de forme annulaire qui est reçu dans la rainure 20 à pivotement autour de l'axe 21.

Le deuxième rotor 24 est en matériau ferromagnétique et est relié à la chaîne cinématique 12.

Lorsque la bobine de commande 19 est soumise à un courant d'excitation, elle engendre des flux magnétiques passant des pôles 22 aux pôles 23, ou inversement, en traversant la rainure 20 et donc le deuxième rotor 24 dans lequel ces flux induisent des champs magnétiques locaux. Ainsi, dans le deuxième rotor 24, chaque flux a une direction de cheminement ayant une composante radiale et une composante circonférentielle. En cas de coupure brutale de l'excitation alors que le rotor est immobile, un champ rémanent est créé localement dans le deuxième rotor 24 à chaque endroit où un flux magnétique a circulé et a une direction identique à celle du flux.

Le frein comprend en outre au moins un aimant monté sur le premier rotor 18 en regard du deuxième rotor 24 et ayant une puissance suffisante de manière à engendrer localement dans le deuxième rotor 24 un niveau d'induction sensiblement égal à un niveau d'induction maximale engendré par la bobine lorsque celle-ci est alimentée.

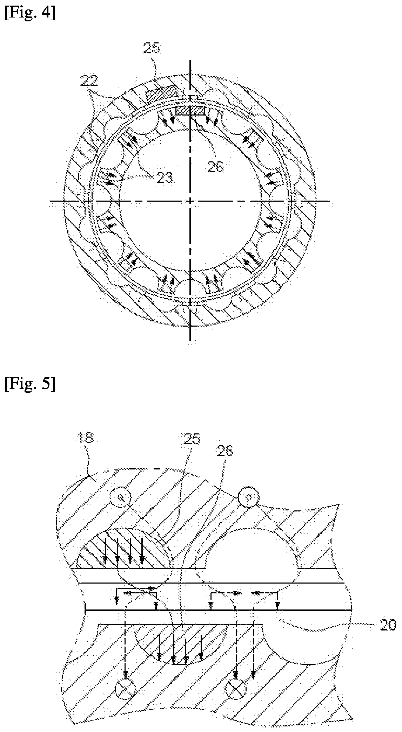

Plus précisément, le frein comprend un aimant 25 (figures 4 et 5) fixé entre deux pôles 22 adjacents l'un à l'autre et un aimant 26 fixé entre deux pôles 23 dont l'un se trouve en face de l'aimant 25.

Les aimants sont positionnés sensiblement en vis-à-vis l'un de l'autre, nonobstant un décalage angulaire correspondant au décalage angulaire entre les pôles 22 et 23.

Les aimants sont polarisés de manière à engendrer un flux magnétique radial qui traverse le deuxième rotor 24 selon une direction ayant une composante radiale et une composante circonférentielle tout comme le flux engendré par la bobine de commande 19 lorsqu'il traverse le deuxième rotor 24 au même endroit.

Comme visible sur la figure 5, le flux engendré par les aimants va faire en sorte que les champs magnétiques locaux qui ont été créés dans le deuxième rotor 24 soient tous orientés dans le même sens, éliminant ainsi l'effet de crantage.

On notera que le frein peut comprendre un seul aimant ou au contraire plusieurs aimants par exemple répartis autour de la rainure 20.

## Revendications

1. Compensateur de vol pour aéronef, comprenant un module de friction (8) à friction variable couplé d'une part à un arbre moteur (11) et d'autre part à un arbre de sortie (13) par l'intermédiaire d'une chaîne cinématique (12), **caractérisé en ce qu'**il comporte un circuit de commande (16) pilotant le module de friction à partir d'une valeur de déplacement angulaire de l'arbre de sortie délivrée par un capteur de position (15) et en fonction d'un signal de commande de retour d'effort (Sₕ) délivré par un calculateur de commande de vol (FCC).

2. Compensateur de vol selon la revendication 1, dans lequel le module de friction à friction variable comprend un frein magnétique (17) à couple de friction variable couplé entre l'arbre moteur (11) et la chaîne cinématique (12).

3. Compensateur de vol selon la revendication 2, dans lequel le frein magnétique (17) est lié à l'arbre moteur par un réducteur irréversible (10)

4. Compensateur de vol selon l'une quelconque des revendications 1 à 3, comprenant un moteur d'entraînement (M) de l'arbre moteur piloté par un signal de commande (S) délivré par le calculateur de commande de vol.

5. Compensateur de vol selon l'une quelconque des revendications 2 à 4, dans lequel le frein magnétique (17) à friction variable comprend un premier rotor (18) lié à l'arbre moteur et équipé d'une bobine de commande (19) et un deuxième rotor (24) monté mobile en regard de pôles du premier rotor, le premier rotor comprenant un aimant (25, 26) placé en regard du deuxième rotor et ayant une puissance suffisante pour engendrer localement dans le deuxième rotor un niveau d'induction sensiblement égal à un niveau d'induction maximal engendré par la bobine lorsque celle-ci est alimentée.

6. Compensateur de vol selon la revendication 5, dans lequel le deuxième rotor a une forme annulaire et est reçu à pivotement autour de son axe central (21) dans une rainure circulaire (20) du premier rotor, la rainure ayant des flancs pourvus de reliefs formant les pôles du premier rotor, le frein comportant au moins un aimant monté dans les flancs de la rainure.

7. Compensateur de vol selon la revendication 6, comprenant deux aimants montés chacun sur les flancs de la rainure.

8. Compensateur de vol selon la revendication 7, dans lequel les aimants sont positionnés sensiblement en vis-à-vis l'un de l'autre.

9. Compensateur de vol selon la revendication 5, dans lequel l'aimant est monté entre deux pôles du stator.

10. Aéronef, en particulier un hélicoptère comprenant un compensateur de vol selon l'une quelconque des revendications 1 à 9.

## Patentansprüche

1. Flugtrimmvorrichtung für Flugzeuge, die ein Reibungsmodul (8) mit variabler Reibung umfasst, das einerseits mit einer Motorwelle (11) und andererseits über eine kinematische Kette (12) mit einer Abtriebswelle (13) gekoppelt ist, **dadurch gekennzeichnet, dass** sie einen Steuerkreis (16) umfasst, der das Reibungsmodul anhand eines Winkelverschiebungswerts der Abtriebswelle, der von einem Positionssensor (15) geliefert wird, und in Abhängigkeit von einem Kraftrückführungs-Steuersignal (Sₕ) ansteuert, das von einem Flugsteuerungscomputer (FCC) geliefert wird.

2. Flugtrimmvorrichtung nach Anspruch 1, wobei das Reibungsmodul mit variabler Reibung eine Magnetbremse (17) mit variablem Reibungsdrehmoment umfasst, die zwischen der Motorwelle (11) und der kinematischen Kette (12) gekoppelt ist.

3. Flugtrimmvorrichtung nach Anspruch 2, wobei die Magnetbremse (17) über ein irreversibles Untersetzungsgetriebe (10) mit der Motorwelle verbunden ist.

4. Flugtrimmvorrichtung nach einem der Ansprüche 1 bis 3, die einen Antriebsmotor (M) der Motorwelle umfasst, der durch ein Steuersignal (S) angesteuert wird, das von dem Flugsteuerungscomputer geliefert wird.

5. Flugtrimmvorrichtung nach einem der Ansprüche 2 bis 4, wobei die Magnetbremse (17) mit variabler Reibung einen ersten Rotor (18), der mit der Motorwelle verbunden und mit einer Steuerspule (19) ausgestattet ist, und einen zweiten Rotor (24) umfasst, der entgegengesetzt zu den Polen des ersten Rotors beweglich montiert ist, wobei der erste Rotor einen gegenüber des zweiten Rotors angeordneten Magneten (25, 26) umfasst und eine ausreichende Leistung aufweist, um lokal im zweiten Rotor ein Induktionsniveau zu erzeugen, das im Wesentlichen einem maximalen Induktionsniveau entspricht, das von der Spule erzeugt wird, wenn diese mit Strom versorgt wird.

6. Flugtrimmvorrichtung nach Anspruch 5, wobei der zweite Rotor eine ringförmige Form hat und um seine Mittelachse (21) in einer kreisförmigen Nut (20) des ersten Rotors schwenkbar aufgenommen ist, wobei die Nut Seiten aufweist, die mit Erhebungen versehen sind, die die Pole des ersten Rotors bilden, wobei die Bremse mindestens einen Magneten umfasst, der in den Seiten der Nut montiert ist.

7. Flugtrimmvorrichtung nach Anspruch 6, die zwei Magnete umfasst, die jeweils an den Seiten der Nut montiert sind.

8. Flugtrimmvorrichtung nach Anspruch 7, wobei die Magnete im Wesentlichen einander gegenüberliegend positioniert sind.

9. Flugtrimmvorrichtung nach Anspruch 5, wobei der Magnet zwischen zwei Polen des Stators montiert ist.

10. Flugzeug, insbesondere ein Helikopter, das eine Flugtrimmvorrichtung nach einem der Ansprüche 1 bis 9 umfasst.

## Claims

1. A flight compensator for an aircraft, comprising a friction module (8) with variable friction coupled on the one hand to a drive shaft (11) and on the other hand to an output shaft (13) via a kinematic chain (12), **characterised in that** it includes a control circuit (16) controlling the friction module from an angular displacement value of the output shaft delivered by a position sensor (15) and as a function of a force feedback control signal (Sₕ) delivered by a flight control calculator (FCC).

2. The flight compensator according to claim 1, wherein the friction module with variable friction comprises a magnetic brake (17) with variable friction torque coupled between the drive shaft (11) and the kinematic chain (12).

3. The flight compensator according to claim 2, wherein the magnetic brake (17) is connected to the drive shaft by an irreversible reducer (10)

4. The flight compensator according to any one of claims 1 to 3, comprising a drive motor (M) of the drive shaft controlled by a control signal (S) delivered by the flight control calculator.

5. The flight compensator according to any one of claims 2 to 4, wherein the magnetic brake (17) with variable friction comprises a first rotor (18) connected to the drive shaft and equipped with a control coil (19) and a second rotor (24) mounted movably opposite poles of the first rotor, the first rotor comprising a magnet (25, 26) placed opposite the second rotor and having sufficient power to locally generate in the second rotor an induction level substantially equal to a maximum induction level generated by the coil when the latter is powered.

6. The flight compensator according to claim 5, wherein the second rotor has an annular shape and is pivotally received about its central axis (21) in a circular groove (20) of the first rotor, the groove having sides provided with reliefs forming the poles of the first rotor, the brake including at least one magnet mounted in the sides of the groove.

7. The flight compensator according to claim 6, comprising two magnets each mounted on the sides of the groove.

8. The flight compensator according to claim 7, wherein the magnets are positioned substantially opposite each other.

9. The flight compensator according to claim 5, wherein the magnet is mounted between two poles of the stator.

10. An aircraft, in particular a helicopter comprising a flight compensator according to any one of claims 1 to 9.
